# EUROPÄISCHE PATENTSCHRIFT

(11) **EP 1 157 986 B1**
(45) Veröffentlichungstag und Bekanntmachung des Hinweises auf die Patenterteilung: **21.05.2003**
(21) Anmeldenummer: 01107399.6
(22) Anmeldetag: 26.03.2001
(51) Int. Cl.: C07C 309/31, C08J 9/00, C08L 27/06

(54) **Zusammensetzung zur Herstellung von PVC-Schlagschäumen**
Composition for preparing frothed PVC foams
Composition pour la préparation de mousses fouettées de PVC

(30) Priorität: 26.05.2000 DE 10026234
(43) Veröffentlichungstag der Anmeldung: 28.11.2001
(73) Patentinhaber: Dr. Th. Böhme KG Chem. Fabrik GmbH & Co., 82538 Geretsried (DE)
(72) Erfinder: Ostermann, Jürgen, 82515 Wolfratshausen (DE); Schinnerl, Heike, 82538 Geretsried (DE); Hieb, Maria, 82538 Geretsried (DE); Schönmann, Gertrud, Dr., 82166 Gräfelfing (DE); Ritschel, Susanne, 82538 Geretsried (DE)
(74) Vertreter: Störle, Christian, Dr.

(56) Entgegenhaltungen:
- EP-A- 0 040 055
- DE-A- 2 848 672
- PATENT ABSTRACTS OF JAPAN vol. 010, no. 321 (C-382), 31. Oktober 1986 (1986-10-31) & JP 61 130350 A (NIPPON ZEON CO LTD), 18. Juni 1986 (1986-06-18)

## Beschreibung

Die Erfindung bezieht sich auf eine Zusammensetzung zur Herstellung von PVC-Schlagschäumen sowie ihre Verwendung zur Herstellung von PVC-Schaumstoffen.

PVC-Schaumstoffe haben eine Vielzahl unterschiedlicher Einsatzmöglichkeiten, Insbesondere zur Beschichtung von Materialien, z. B. als geschäumte Rückseiten von Fußbodenbelägen. Beim gebräuchlichsten Verfahren zur Herstellung von PVC-Schaumstoffen wird Luft mechanisch in PVC-Plastisole eingeschlagen. Der dadurch erhaltene Schaum, der wie Schlagsahne aussieht, wird durch Erwärmen auf z. B. 180°C verfestigt (geliert). Dabei ist es erwünscht, daß die Dichte des Schaumes 0,6 g/cm³ bis 0,4 g/cm³ beträgt.

Um verbesserte Schlagschäume herzustellen, werden den PVC-Plastisolen Additive zugesetzt, beispielsweise Calciumdodecylbenzolsulfonat, das als Schaumstandmittel wirkt. Gegebenenfalls wird es zusammen mit anderen Verbindungen zum PVC-Plastisol gegeben. Ein entsprechendes Handelsprodukt ist SYNTHAMID US 35 der Firma Dr. Th. Böhme KG Chem. Fabrik GmbH & Co., das als Schaumstandmittel PVC-Plastisolen zugesetzt wird, besteht aus etwa 30 Gew.-% Calciumdodecylbenzolsulfonat und ca. 70 Gew.-% Fettsäureester.

Damit können zwar die gewünschten Dichten erreicht werden, allerdings sind die unter Verwendung dieses Produktes hergestellten Schäume bzw. Schaumstoffe nicht thermostabil. Wird es nämlich zur Herstellung von Schaumstoffen PVC-Plastisolen zugesetzt, diese geschäumt und anschließend wie oben beschrieben geliert, ist sehr oft eine unerwünschte Verfärbung des erhaltenen PVC-Schaumstoffes festzustellen, insbesondere wenn die Gelierung über einen längeren Zeitraum durchgeführt wird.

Der vorliegenden Erfindung liegt somit die Aufgabe zugrunde, eine Zusammensetzung für die Herstellung von PVC-Schlagschäumen bereitzustellen, die nicht die Nachteile des Standes der Technik aufweist.

Erfindungsgemäß wird dies mit einer Zusammensetzung erreicht, die sich dadurch auszeichnet, daß sie folgende Komponenten umfaßt:
(a) 15 Gew.-% bis 35 Gew.-% Erdalkalisalz einer Alkylbenzolsulfonsäure,
(b) 10 Gew.-% bis 65 Gew.-% einer Verbindung der Formel (1) 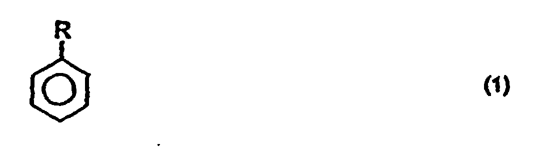 und/oder der Formel (2) 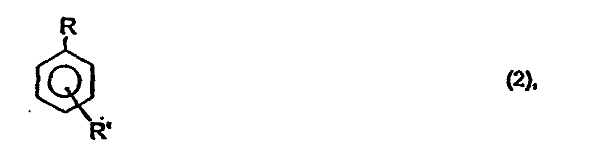 wobei R und R' unabhängig voneinander für einen substituierten oder unsubstituierten Alkyl-, Alkenyl- oder Alkinyl-Rest mit 6-18 Kohlenstoff-atomen Alkandiol mit 2-10 kohlenstoff-atomen stehen, und
(c) 1 Gew.-% bis 20 Gew.-%.

Dabei beziehen sich die Mengenangaben auf die erfindungsgemäße Zusammensetzung.

Es wurde nun überraschenderweise gefunden, daß die erfindungsgemäßen Zusammensetzungen bestens zur Herstellung von PVC-Schlagschäumen geeignet sind, die, wenn sie nachfolgend geliert werden, PVC-Schaumatoffe ergeben, die thermostabil sind.

Bei der Herstellung von PVC-Schaumstoffen werden die erfindungsgemäßen Zusammensetzungen, wie bereits vorstehend erwähnt, PVC-Plastisolen zugegeben, die nachfolgend, beispielsweise durch mechanisches Einrühren von Luft, geschäumt und anschließend unter Erwärmung, beispielsweise auf etwa 180°C, geliert werden. Selbst wenn diese Temperaturbehandlung während 20 Minuten durchgeführt wird, ist keine Verfärbung des erhaltenen PVC-Schaumstoffes zu beobachten, er bleibt auch nach dieser Behandlung weiß.

Darüberhinaus wirkt sich die erfindungsgemäße Zusammensetzung vorteilhaft auf die Dichte der PVC-Schlagschäume aus. Die Dichte von PVC-Plastisolen beträgt üblicherweise etwa 1,3 g/cm³. Bei Verwendung der erfindungsgemäßen Zusammensetzungen können in einfacher Weise die gewünschten niedrigen Dichten der Schlagschäume von z. B. 0,6 g/cm³ *bis* 0,4 g/cm³ erhalten werden. Des weiteren wirkt die erfindungsgemäße Zusammensetzung hervorragend als Schaumstandmittel; die PVC-Plastisole können somit in einfacher Weise zu mechanischen Schlagschäumen verarbeitet werden, die nicht zusammenfallen und gut weiterverarbeltet werden können.

Ferner werden durch Verwendung der erfindungsgemäßen Zusammensetzungen in besonders günstiger Weise PVC-Schlagschäume mit besonders guten Eigenschaften erhalten, wie beispielsweise günstige Streichfähigkeit, hervorragende Fließfähigkeit und sehr feinzelliger Schaum.

Als Komponente (a) der erfindungsgemäßen Zusammensetzung liegt ein Erdalkalisalz einer Alkylbenzolsulfonsäure In einer Menge von 15 Gew.-% bis 35 Gew.-%, bezogen auf die erfindungsgemäße Zusammensetzung, vor.

Die Alkylgruppe kann in o-, m- oder p-Position zur SO₃H-Gruppe der Benzolsulfonsäure stehen, wobei sie mit einem ihrer endständigen oder einem ihrer mittleren C-Atome an den Benzolring gebunden sein kann. Die Alkylgruppe kann linear oder verzweigt sein; sie kann 8 bis 16, insbesondere 12 C-Atome aufweisen. Das Erdalkali-lon kann Ca²⁺ sein.

Die erfindungsgemäße Zusammensetzung kann ein oder mehrere, voneinander verschiedene Erdalkalisalze einer Alkylbenzolsulfonsäure aufweisen.

Besonders bevorzugt wird als Erdalkalisalz einer Alkylbenzolsulfonsäure Calciumdodecylbenzolsulfonat eingesetzt, da es ein besonders gutes Schaumstandmittel ist.

Die Menge des Erdalkalisalzes einer Alkylbenzolsulfonsäure beträgt günstigerweise ca. 20 Gew.-%, da diese Menge ausreichend ist, um eine gute Wirkung als Schaumstandmittel zu erreichen.

Als Komponente (b) liegt in der erfindungsgemäßen Zusammensetzung eine Verbindung der Formel (1) 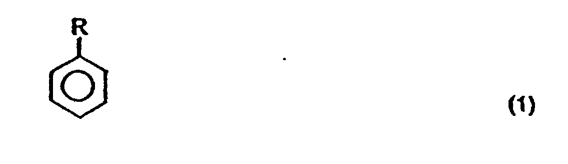 und/oder der Formel (2) 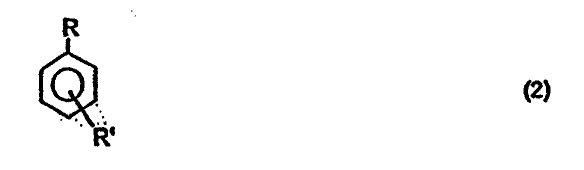 vor, wobei R und R' unabhängig voneinander für einen substituierten oder unsubstitulerten Alkyl-, Alkenyl- oder Alkinyl-Rest stehen. Die Reste R und R' können 6 bis 18 KohlenstoffAtome aufweisen.

In der Verbindung gemäß Formel (2) kann der Rest R' in o-, m- oder p-Position zum Rest R stehen.

Liegt in den Verbindungen der Formeln (1) und (2) ein Alkenyl-Rest vor, so kann dieser eine oder mehrere, z. B. zwei, Doppelbindungen aufweisen. Ist R und/oder R' ein Alkinyl-Rest, so kann dieser eine oder mehrere, z. B. zwei, Dreifachbindungen besitzen.

Wie bereits vorstehend ausgeführt wurde, können die Alkyl-, Alkenyl- oder Alkinyl-Reste substituiert sein, wobei sie einen oder mehrere Substituenten aufweisen können. Beispiele der Substituenten sind die Hydroxy-Gruppe oder Halogene, wie F, Cl und Br. Liegen mehrere Substituenten vor, können diese gleich oder verschieden voneinander sein.

In den Verbindungen der Formeln (1) und (2) können auch Substituenten am Benzolring vorliegen. Beispiele solcher sind die OH-Gruppe und Halogene, wie F, Cl und Br. Dabei können auch mehrere Substituenten an die Benzolringe gebunden sein, die gleich oder verschieden voneinander sein können.

Die erfindungsgemäße Zusammensetzung kann eine oder mehrere Verbindungen der Formel (1) aufweisen. Des weiteren kann sie eine oder mehrere Verbindungen der Formel (2) enthalten. Die erfindungsgemäße Zusammensetzung kann auch eine oder mehrere Verbindungen der Formel (1) und eine oder mehrere Verbindungen der Formel (2) aufweisen.

In einer bevorzugten Ausführungsform der erfindungsgemäßen Zusammensetzung ist die Verbindung der Formel (1) ein Monoalkylbenzol. Liegt ein solches in der erfindungsgemäßen Zusammensetzung vor, werden besonders niedrige Dichten des Schlagschaums erhalten und die unter Verwendung der erfindungsgemäßen Zusammensetzung hergestellten PVC-Schaumstoffe sind besonders thermostabil, insbesondere wurde beim Gelieren des Schlagschaums keine Verfärbungen beobachtet; die erhaltenen PVC-Schaumstoffe bleiben weiß.

Der Alkylrest des Monoalkylbenzols kann linear oder verzweigt sein. Er kann über eines der terminalen C-Atome oder Ober eines der mittleren C-Atome an den Benzolring gebunden sein.

Besonders bevorzugt ist das Monoalkylbenzol ein C₆-C₁₈-Alkylbenzol. Dies bedeutet, daß ein Alkylrest mit 6 bis 18-Kohlenstoff-Atomen an den Benzolring gebunden sein kann. Vertreter eines solchen ist das Dodecylbenzol.

In einer besonders bevorzugten Ausführungsform der erfindungsgemäßen Zusammensetzung umfaßt die Verbindung der Formel (2) ein Dialkylbenzol oder ein Gemisch von Dialkylbenzolen. Als günstig hat es sich dabei erwiesen, daß das Dialkylbenzol ein lineares Dialkylbenzol oder ein Gemisch linearer Dialkylbenzole, insbesondere mit Alkylkettenlängen von C₁₀-C₁₃, umfaßt. Dabei können beiden Alkylketten die selbe oder unterschiedliche Kettenlänge(n) aufweisen.

Die Konstitution eines linearen Dialkylbenzols mit Alkylkettenlängen von C₁₀ bis C₁₃ können durch folgende allgemeine Strukturformel veranschaulicht werden 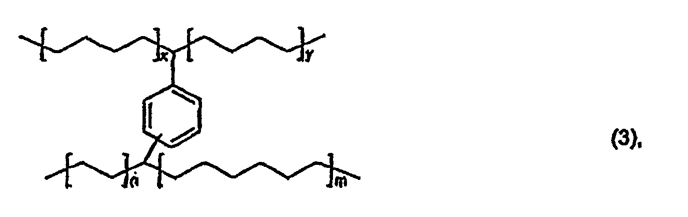 wobei x und y die Anzahl der C-Atome in der ersten Alkylkette,
m und n die Anzahl der C-Atome In der zweiten Alkylkette angeben,
x, y, m und n für eine Zahl von 0 bis 13 steht,
wobei die Gesamtlänge der Alkylketten 10 bis 13 Kohlenstoffatome beträgt.

Die vorgenannten Monoalkyl- und Dialkylbenzole können bei der Alkylierung von Benzol mit Chlorparaffinen unter Verwendung eines AlCl₃-Katalysators in üblicher Weise hergestellt werden.

Die Menge der Verbindungen der Formeln (1) und (2) beträgt günstigerweise etwa 20 bis 30 Gew.-%, bezogen auf die erfindungsgemäße Zusammensetzung. Mit diesen Mengen werden sowohl die Eigenschaften der erfindungsgemäßen Zusammensetzung zur Herstellung von PVC-Schlagschäumen und PVC-Schaumstoffen sowie deren Thermostabilität besonders günstig beeinflußt.

Als Komponente (c) liegt in der erfindungsgemäßen Zusammensetzung ein Diol in einer Menge von 1 Gew.-% bis 20 Gew.-%, insbesondere etwa 5 Gew.-%, bezogen auf die erfindungsgemäße Zusammensetzung, vor.

Unter dem Ausdruck "Diol" werden allgemeine Dialkohole verstanden, also Verbindungen, die zwei Hydroxy-Gruppen im Molekül enthalten.

Dabei können die Diole von Kohlenwasserstoffen, insbesondere Alkanen, abgeleitet sein. Sie können zwei bis zehn Kohlenstoffatome aufweisen. Die Alkane können linear und verzweigt sein.

Die beiden Hydroxy-Gruppen können sich am selben C-Atom, an zwei benachbarten C-Atomen oder, insbesondere wenn das Diol von einem linearen Alkan abgeleitet ist, an den beiden endständigen C-Atomen befinden.

Vertreter der Diole sind 1,4-Butandiol, 1,2-Propylenglykol, 1,3-Propandiol, 1,3-Butandiol und 1,6-Hexandiol.

Die erfindungsgemäße Zusammensetzung kann ein oder mehrere, voneinander verschiedene Diole aufweisen.

Die erfindungsgemäße Zusammensetzung kann weiterhin einen Fettsäureester enthalten. Die Menge des Fettsäureesters kann dabei vorzugsweise so gewählt werden, daß der Ester den Rest der Zusammensetzung bildet.

Die Fettsäureester können Ester gesättigter oder ungesättigter C₁₂-C₂₄-Fettsäuren mit C₁-C₆-Alkoholen sein.

Unter dem Ausdruck "Fettsäureester" werden auch Verbindungen verstanden, die durch Umsetzung von 1 Mol gesättigter oder ungesättigter Pflanzenfettsäure mit 12 bis 24 Kohlenstoff-Atomen, insbesondere 12 bis 18 Kohlenstoff-Atomen, mit 1 bis 2 Mol, z. B. 1,5 Mol, Alkylenoxid erhältlich sind. Als Alkylenoxid können dabei Ethylenoxid und/oder Propylenoxid verwendet werden. Ein Beispiel der Pflanzenfettsäure ist Kokosfettsäure. Ein Vertreter des vorgenannten Fettsäureesters ist das Umsetzungsprodukt von 1 Mol Kokosfettsäure mit 1,5 Mol Propylenoxid.

Die Menge des Fettsäureesters wird günstigerweise so gewählt, daß er in Verbindung mit den vorgenannten Komponenten (a), (b) und (c) den Rest der erfindungsgemäßen Zusammensetzung bildet. Die erfindungsgemäße Zusammensetzung kann einen oder mehrere, voneinander verschiedene Fettsäureester aufweisen.

Die In der erfindungsgemäßen Zusammensetzung eingesetzten Fettsäureester können flüssige Verbindungen sein. Sie können dabei als Emulgatoren für die Komponenten (a), (b) und (c) wirken.

Die Mengen des Erdalkalisalzes einer Alkylbenzolsulfonsäure, der Verbindungen der Formeln (1) und/oder (2), des Diols und gegebenenfalls des Fettsäureesters können so aufeinander abgestimmt werden, daß in der erfindungsgemäßen Zusammensetzung keine Phasentrennung auftritt. Dadurch ist die erfindungsgemäße Zusammensetzung besonders gut handhabbar.

Die erfindungsgemäße Zusammensetzung kann in einfacher Weise aus den vorgenannten Komponenten (a), (b) und (c) sowie gegebenenfalls dem Fettsäureester durch Mischen hergestellt werden.

Die erfindungsgemäße Zusammensetzung eignet sich bestens zur Verwendung in einem Verfahren zur Herstellung von PVC-Schaumstoffen.

Der Ausdruck "PVC-Schaumstoffe" bezeichnet Werkstoffe auf der Basis von PVC, die über ihre ganze Masse verteilte offene Zellen und ein Rohdichte aufweisen können, die niedriger als die der PVC-Gerüstsubstanz sein kann. Der Schaumstoff kann dabei grob- oder feinzellig sein. Er kann auch einen geringen Anteil an geschlossenen Zellen aufweisen, wobei es jedoch für die Luftdurchlässigkeit, insbesondere bei der Verwendung der Schaumstoffe als Rückseite von Fußbodenbelägen, günstig ist, wenn der weitaus überwiegende Teil, z. B. 90%, insbesondere 95% der Zellen, offene Zellen sind. Diese Werkstoffe können jede beliebige Gestalt (Form) aufweisen, abhängig von ihrem jeweiligen Verwendungszweck. Werden die Schaumstoffe als Rückseiten von Fußbodenbelägen verwendet, ist es günstig, wenn sie bahnförmig sind und eine Dicke von 1 mm bis 10 mm, insbesondere ca. 3 mm, aufweisen, wobei die Breite und Länge einer solchen Bahn größer als die Dicke ist.

Zur Herstellung von PVC-Schaumstoffen wird die erfindungsgemäße Zusammensetzung zunächst einem PVC-Plastisol in üblicher Weise zugegeben.

Bei einem PVC-Plastisol handelt es sich um eine Dispersion von PVC in hochsiedenden organischen Lösungsmitteln, die bei höherer Temperatur als Weichmacher fungieren. Beim Erwärmen der PVC-Plastisole diffundieren Lösungsmittel in die dispergierten Polymere, lagern sich zwischen deren Makromolekülen ein und bewirken dadurch ein Plastifizieren. Beim Abkühlen gelieren PVC-Plastisole zu flexiblen, formstabilen und abriebfesten Systemen.

Als Weichmacher werden vorzugsweise Phthalate, d. h. von Phthalsäure abgeleitete Verbindungen eingesetzt. Dabei kann ein Phthalat oder es können mehrere, z. B. zwei, voneinander verschiedene Phthalate verwendet werden. Zur Herstellung stabiler Schlagschäume ist es günstig, wenn mindestens 40% des Weichmachers schnell gelierend sind, wobei "schnell gelierend" ein auf diesem Gebiet üblicher Fachausdruck ist. Beispiele besonders geeigneter Phthalate sind Benzylbutylphthalat und Di-(2-ethylhexyl)phthalat, die besonders schnell gelierend sind. Als besonders günstig hat es sich erwiesen, wenn anteilsweise Benzylbutylphthalat im PVC-Plastisol vorhanden ist, da dadurch die Herstellung von feinzelligen Schäumen und Schaumstoffen besonders gut möglich ist. Die gesamte Weichmachermenge beträgt günstigerweise zwischen 40 bis 80 Gew.-Teile pro 100 Gew.-Teile PVC. Bei diesen Weichmachermengen haben die Plastisole eine für die Verschäumung besonders günstige Viskosität.

Der Ausdruck "PVC" umfaßt sowohl Polyvinylchloridhomopolymere als auch Polyvinylchloridcopolymere sowie deren Gemische. Dabei können im Plastisol mehrere, z. B. zwei, voneinander verschiedene Polyvinylchloridhomopolymere vorliegen, die z. B. unterschiedliche Molekulargewichte aufweisen. Unter einem Polyvinylchloridcopolymer wird ein Copolymer aus Vinylchlorid und einem anderen, mit Vinylchlorid polymerisierbaren Monomor (Comonomer) verstanden, z. B. Vinylacetat, Vinylidenchlorid, Vinylether und Vinylester. Dabei kann der Comonomeranteil 5 bis 15 Gew.-% des Vinylchlorids betragen. Das Copolymer kann ein Block- oder ein Randomcopolymer sein. Im Plastisol können mehrere, z. B. zwei, voneinander verschiedene Polyvinylcopolymere vorliegen, die z. B. unterschiedliche Molekulargewichte und/oder unterschiedliche Comonomere aufweisen. Das Plastisol kann auch ein Gemisch von mehreren, z. B. zwei, unterschiedlichen Polyvinylchloridhomopolymeren und von mehreren, z. B. zwei, unterschiedlichen Polyvinylchloridcopolymeren enthalten.

Vorstehend beschriebene Polymere können z. B. durch Emulsionspolymerisation, Mikrosuspensionspolymerisation und Massepolymerisation hergestellt werden.

Zur Herstellung der PVC-Schaumstoffe wird, wie bereits vorstehend ausgeführt wurde, eine erfindungsgemäße Zusammensetzung zu einem PVC-Plastisol gegeben. Dieses Plastisol kann neben den vorstehend genannten Weichmachern noch weitere Verbindungen aufweisen, beispielsweise Stabilisatoren, wie ein Barium-Zink-Salz mittelkettiger Carbonsäuren, insbesondere in einer Menge von etwa 1 Gew.-Teil pro 100 Gew.-Teile Harz (PVC).

Die Menge der erfindungsgemäßen Zusammensetzung im PVC-Plastisol kann von 1 bis 6, insbesondere etwa 3 Gew.-Teile pro 100 Gew.-Teile PVC betragen.

Nach Zugabe aller Bestandteile zum PVC-Plastisol wird dieses geschäumt, d. h. zu einem Schaum verarbeitet. Dieses Schäumen kann in üblicher Weise erfolgen, beispielsweise durch mechanisches Einschlagen von Luft, wobei ein an sich bekannter Schaummischer verwendet werden kann. Dies kann auch durch einen handelsüblichen Küchenmixer, z. B. von der Firma Kennwood, erfolgen.

Der Schaum wird dann In die gewünschte Form gebracht, z. B. durch Aufstreichen auf eine Unterlage, beispielsweise ein Trennpapier. Dieses Aufstreichen kann beispielsweise mittels eines Rakels erfolgen. Die Dicke der Schaumschicht kann 1 bis 10 mm, vorzugsweise 3 mm, betragen.

Danach wird der Schaum geliert, wodurch ein PVC-Schaumstoff erhalten wird. Das Gelieren erfolgt durch Erwärmen auf z. B. etwa 180°C und anschließendem Abkühlen. Die Dauer des Gelierens ist abhängig von der Form, in die der Schaum gebracht wurde. Wird der Schaum in Form einer Schicht mit einer Dicke von ca. 3 mm auf eine Unterlage aufgebracht, so beträgt die Gelierdauer etwa 5 Minuten.

Nach dem Gelieren kann der Schaumstoff vom Trennpapier entfernt werden.

Durch die Verwendung der erfindungsgemäßen Zusammensetzung sind PVC-Schaumstoffe mit besonders guten Eigenschaften auf einfache, schnelle und kostengünstige Weise erhältlich.

Die nachfolgenden Beispiele erläutern die Erfindung.

### Beispiel 1: Herstellung erfindungsgemäßer Zusammensetzungen

Die in der nachfolgenden Tabelle 1 angegebenen erfindungsgemäßen Zusammensetzungen wurden hergestellt, indem die Bestandteile in üblicher Weise in einem Mischer gemischt wurden.

**Tabelle 1:**

| Erfindungsgemäße Zusammensetzungen (Mengenangaben in Gew.-%) | | | | | |
|---|---|---|---|---|---|
| Bestandteil | Z1 | Z2 | Z3 | Z4 | Z5 |
| Calciumdodecylbenzolsulfonat¹⁾ | 19, 95 | 19,95 | 19,95 | 19,95 | 19,95 |
| Gemisch linearer Dialkylbenzole mit einer Alkylkettenlänge von C₁₀ bis C₁₃ | 23,75 | 23,75 | 23,75 | 23,75 | 23,75 |
| 1,4-Butandiol | 5 | | | | |
| 1,2-Propylenglykol | | 5 | | | |
| 1,3-Propandiol | | | 5 | | |
| 1,3-Butandiol | | | | 5 | |
| 1,6-Hexandiol | | | | | 5 |
| Umsetzungsprodukt von 1 Mol Kokosfettsäure mit 1,5 Mol Propylenoxid ¹⁾ | Rest | Rest | Rest | Rest | Rest |

| | | | | | |
|---|---|---|---|---|---|
| ¹⁾ Ein Gemisch von Calciumdodecylbenzolsulfonat (30 Gew.-%) und dem Umsetzungsprodukt von 1 Mol Kokosfettsäure mit 1,5 Mol Propylenoxid (Rest) ist unter der Bezeichnung SYNTHAMID® US 35 von der Firma Dr. Th. Böhme KG Chem. Fabrik GmbH & Co. erhältlich. | | | | | |

### Beispiel 2: Verwendung erfindungsgemäßer Zusammensetzungen zur Herstellung von PVC-Schaumstoffen

Es wurden die In der nachfolgenden Tabelle 2 angegebenen Rezepturen unter Verwendung der erfindungsgemäßen Zusammensetzungen Z1, Z2, Z3, Z4 und Z5 des Beispiels 1 hergestellt.

**Tabelle 2:**

| Rezeptur-Nr. (Gew.-Teile) | 1 | 2 | 3 | 4 | 5 | 6 |
|---|---|---|---|---|---|---|
| PVC (K-Wert 80) Vestolit® P 1415/K80 | 140 | 140 | 140 | 140 | 140 | 140 |
| PVC (K-Wert 65) Vinnolit® C65V | 60 | 60 | 60 | 60 | 60 | 60 |
| DOP | 50 | 50 | 50 | 50 | 50 | 50 |
| BBP | 50 | 50 | 50 | 50 | 50 | 50 |
| Stabilisator (Irgastob ® BZ 505) | 2 | 2 | 2 | 2 | 2 | 2 |
| SYNTHAMID US 35 | 6 | | | | | |
| Z1 | | 6 | | | | |
| Z2 | | | 6 | | | |
| Z3 | | | | 6 | | |
| Z4 | | | | | 6 | |
| Z5 | | | | | | 6 |
| Schaumdichte | 0,60 | 0,54 | 0,55 | 0,57 | 0,58 | 0,61 |

Vestolit® P 1415/K80 ist ein Mikrosuspensions-PVC der Vestolit GmbH mit einem K-Wert von 80; Vinnolit® C 65 V ist ein durch Suspensionspolymerisation hergestelltes Verschnittharz für PVC-Pasten mit einem K-Wert von 65 der Vinnolit GmbH; DOP ist die Abkürzung für Dl-(2-ethylhexyl)phthalat; BBP ist die Abkürzung für Benzylbutylphthalat; Irgastab® BZ 505 ist ein handelsüblicher Barium-Zink-Stabilisator; SYNTHAMID US 35 Ist ein handelsübliches Schaumstandmittel der Firma Dr. Th. Böhme KG Chem. Fabrik GmbH & Co., bestehend aus etwa 30 Gew.-% Calciumdodecylbenzolsulfonat und einem Fettsäureester aus Kokosfettsäure mit 1,5 Mol Propylenoxid.

Die in Tabelle 2 aufgeführten Komponenten wurden zusammengegeben und zu einem Schaum geschlagen. Die dabei erreichten Schaumdichten sind ebenfalls in Tabelle 2 angegeben.

Von diesen Schäumen wurden Aufstriche auf Trennpapier in einer Dicke von 3 mm angefertigt und jede Probe jeweils während 5, 10, 15 und 20 Minuten bei 180 °C behandelt. Bei dem handelsüblichen Produkt, das keine Verbindungen der Formeln (1) und (2) aufweist, wurden ganz erhebliche Verfärbungen beobachtet, wohingegen bei Verwendung der erfindungsgemäßen Zusammensetzungen selbst bei einer Wärmebehandlung bei 180 °C während 20 Minuten keine Verfärbungen festgestellt wurden.

## Patentansprüche

1. Zusammensetzung zur Herstellung von PVC-Schlagschäumen, umfassend
(a) 15 Gew.-% bis 35 Gew.-% Erdalkalisalz einer Alkylbenzolsulfonsäure,
(b) 10 Gew.-% bis 65 Gew.-% einer Verbindung der Formel (1) 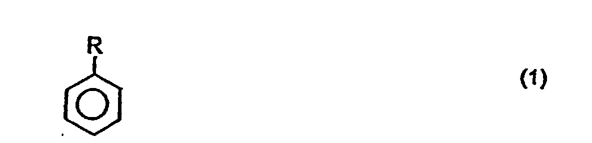 und/oder der Formel (2) 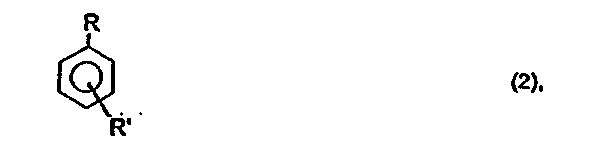 wobei R und R' unabhängig voneinander für einen substituierten oder unsubstituierten Alkyl-, Alkenyl- oder Alkinyl-Rest mit 6-18 Kohlenstoffo-atomen Alkandiol mit 2-10 Kohlenstoff-atomen stehen, und
(c) 1 Gew.-% bis 20 Gew.-%.

2. Zusammensetzung nach Anspruch 1, wobei das Erdalkalisalz einer Alkylbenzolsulfonsäure Calciumdodecylbenzolsulfonat ist.

3. Zusammensetzung nach einem der vorhergehenden Ansprüche, wobei die Verbindung der Formel (1) ein Monoalkylbenzol ist.

4. Zusammensetzung nach Anspruch 3, wobei das Monoalkylbenzol ein C₆-C₁₆-Alkylbenzol ist.

5. Zusammensetzung nach einem der vorhergehenden Ansprüche, wobei die Verbindung der Formel (2) ein Dialkylbenzol oder ein Gemisch von Dialkylbenzolen umfaßt

6. Zusammensetzung nach Anspruch 5, wobei das Dialkylbenzol ein lineares Dialkylbenzol mit Alkylkettenlängen von C₁₀ bis C₁₃ oder ein Gemisch dieser umfaßt.

7. Zusammensetzung nach einem der vorhergehenden Ansprüche, wobei das Diol 1,4-Butandiol, 1,2-Propylenglykol, 1,3-Propandiol, 1,3-Butandiol, 1,6-Hexandiol oder ein Gemisch von zwei oder mehreren davon ist.

8. Zusammensetzung nach einem der vorhergehenden Ansprüche, wobei sie weiterhin einen Fettsäureester enthält.

9. Zusammensetzung nach Anspruch 8, wobei der Fettsäureester ein C₁₂-C₂₄-Pflanzenfettsäure mit 1 bis 2 von Alkylenoxid abgeleiteten Einheiten ist.

10. Zusammensetzung nach einem der Ansprüche 8 oder 9, wobei der Fettsäureester in einer solchen Menge vorliegt, daß er den Rest der Zusammensetzung bildet.

11. Verwendung einer Zusammensetzung nach einem der Ansprüche 1 bis 10 in einem Verfahren zur Herstellung von PVC-Schaumstoffen

## Claims

1. Composition for the production of PVC frothing foams, comprising
(a) 15% by weight to 35% by weight of an alkaline earth metal salt of an alkylbenzenesulfonic acid,
(b) 10% by weight to 65% by weight of a compound of formula (1): (c) 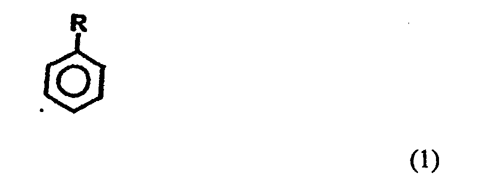 and/or of formula (2): 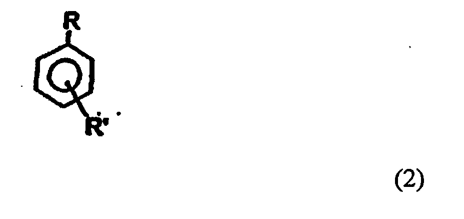 R and R' independently of one another being a substituted or unsubstituted alkyl, alkenyl or alkynyl radical having 6 - 18 carbon atoms, and
(c) 1% by weight to 20% by weight of an alkanediol having 2 - 10 carbon atoms.

2. Composition according to Claim 1 wherein the alkaline earth metal salt of an alkylbenzenesulfonic acid is calcium dodecylbenzenesulfonate.

3. Composition according to one of the preceding claims wherein the compound of formula (1) is a monoalkylbenzene.

4. Composition according to Claim 3 wherein the monoalkylbenzene is a C₆-C₁₈-alkylbenzene.

5. Composition according to one of the preceding claims wherein the compound of formula (2) comprises a dialkylbenzene or a mixture of dialkylbenzenes.

6. Composition according to Claim 5 wherein the dialkylbenzene comprises a linear dialkylbenzene with alkyl chain lengths of C₁₀ to C₁₃ or a mixture thereof.

7. Composition according to one of the preceding claims wherein the diol is 1,4-butanediol, 1,2-propylene glycol, 1,3-propanediol, 1,3-butanediol, 1,6-hexanediol or a mixture of two or more thereof.

8. Composition according to one of the preceding claims which also contains a fatty acid ester.

9. Composition according to Claim 8 wherein the fatty acid ester is a C₁₂-C₂₄ plant fatty acid with 1 to 2 units derived from an alkylene oxide.

10. Composition according to Claim 8 or 9 wherein the fatty acid ester is present in an amount such that it forms the remainder of the composition.

11. Use of a composition according to one of Claims 1 to 10 in a process for the production of PVC foams.

## Revendications

1. Composition pour la fabrication de mousses fouettées de PVC constituée de
a) 15% à 35% en poids de sel alcalino-terreux d'un acide alkylbenzènesulfonique,
b) 10 à 65% en poids d'un composé de la formule (1) 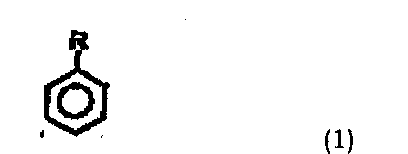 et/ou de la formule (2) 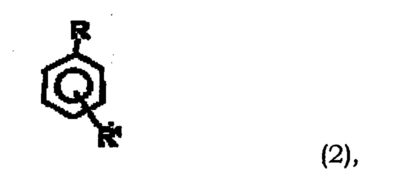 dans laquelle R et R' représentent indépendamment l'un de l'autre un radical alkyle, alcényle ou alcynyle comportant de 6 à 18 atomes de carbone, substitué ou non, et
(c) 1 à 20% en poids d'un alcanediol comportant de 2 à 10 atomes de carbone.

2. Composition selon la revendication 1, dans laquelle le sel alcalino-terreux d'acide alkylbenzènesulfonique est le dodécylbenzènesulfonate de calcium.

3. Composition selon l'une des revendications précédentes, dans laquelle le composé de formule (1) est un monoalkylbenzène.

4. Composition selon la revendication 3, dans laquelle le monoalkylbenzène est un alkylbenzène en C₆ à C₁₈.

5. Composition selon l'une des revendications précédentes, dans laquelle le composé de formule (2) comprend un dialkylbenzène ou un mélange de dialkylbenzènes.

6. Composition selon la revendication 5, dans laquelle le dialkylbenzène comprend un dialkylbenzène linéaire avec des longueurs de chaînes alkyles allant de C₁₀ à C₁₃ ou un mélange de celles-ci.

7. Composition selon l'une des revendications précédentes, dans laquelle le diol est le 1,4-butanediol, le 1,2-propylèneglycol, le 1,3-propanediol, le 1,3-butanediol, le 1,6-hexanediol ou un mélange de deux ou plusieurs de ces composés.

8. Composition selon l'une des revendications précédentes, contenant en plus un ester d'acide gras.

9. Composition selon la revendication 8, dans laquelle l'ester d'acide gras est un acide gras végétal en C₁₂ à C₂₄ avec une à deux unités dérivées d'un oxyde d'alkylène.

10. Composition selon l'une des revendications 8 ou 9, dans laquelle l'ester d'acide gras est présent dans une quantité telle qu'il constitue le reste de la composition.

11. Utilisation d'une composition selon l'une des revendications 1 à 10, dans un procédé de préparation de mousses de PVC.
